# EUROPEAN PATENT APPLICATION

(11) **EP 1 604 799 A1**
(43) Date of publication of application: **14.12.2005**
(21) Application number: 05011867.8
(22) Date of filing: 01.06.2005
(51) Int. Cl.: B29C 45/42, B29C 45/76, B29C 37/00, B25J 9/04, B25J 9/06

(54) **Extracting device for molded articles**

(30) Priority: 11.06.2004 JP 2004174352
(71) Applicant: FANUC LTD, Minamitsuru-gun, Yamanashi 401-0597 (JP)
(72) Inventor: Nihei, Ryo, Fujiyoshida-shi, Yamanashi 403-0005 (JP); Yamanaka, Katsuyuki, Room 10-308, Minamitsuru-gun Yamanashi 401-0511 (JP); Kinoshita, Satoshi, Minamitsuru-gun, Yamanashi 401-0511 (JP); Yasumura, Mitsuhiro, Minamitsuru-gun, Yamanashi 401-0302 (JP)
(74) Representative: Schmidt, Steffen J.

(57) **Abstract**

An extracting device (2) capable of extracting a molded article to both of a front side and a back side of a molding machine (1). The extracting device (2) is loaded on an upper side of the molding machine (1). The extracting device includes a plurality of arms (12,14,16) configured to rotate about vertical axes and a vertical motion arm (17) mounted to the end of the arms. The vertical motion arm (17) has a gripper (26) at its front end for gripping the molded article. The molded article may be extracted to the back side of the machine by moving the end of the arms rotatable about the vertical axes to the back side. Also, the molded article may be extracted to the front side of the machine by moving the end of the arms to the front side. Even when the molded article is extracted to the front side of the molding machine, the extracting device cannot disturb the work of the operator and the safety of the operator may be ensured. In setting a molding condition, for example, the work of the operator may be simplified by extracting the molded article to the front side.

## Description

### BACKGROUND OF THE INVENTION

### 1. Field of the Invention

The present invention relates to an extracting device, loaded on a molding machine, for extracting a molded article when a mold of the machine is unclamped.

### 2. Description of the Related Art

An extracting device is arranged with a molding machine, in order to extract a molded article, positioned in an opened or unclamped mold, and a runner after the molded article is formed in the molding machine. In general, this extracting device is type of a rectangular coordinate system including a plurality of straight axes.

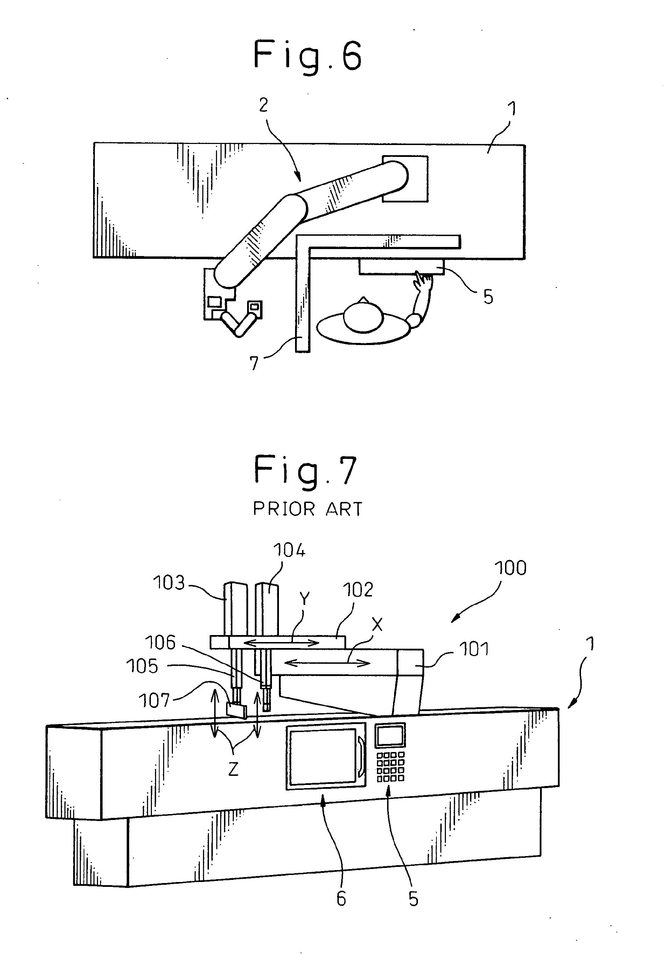

Fig. 7 shows an example of an extracting device of the rectangular coordinate system type, mounted on a molding machine. A base 101 of the extracting device 100 of the rectangular coordinate system type is attached to the molding machine 1. The base 101 has a guide means for guiding a movable member 102 in the X-axis direction perpendicular to the longitudinal direction of the molding machine 1. A molded article extracting structure 103 and a runner extracting structure 104 are attached to the movable member 102. The structures 103 and 104 are configured to move in the Y-axis direction perpendicular to the direction of movement of the movable member 102 (X-axis direction). The structures 103 and 104 have a molded article gripping means 105 and a runner gripping means 106, respectively, such as a hand or a sucker attached to the end of the structures. The gripping means 105 and 106 may be driven in the Z-axis direction perpendicular to both of the X-axis and Y-axis. By means of the constitution, the gripping means 105 and 106 may be moved in the X, Y and Z direction so as to grip and extract the molded article from the opened mold and the runner. In addition, numerals 5 and 6 indicate an operating part of the molding machine 1 and a safety door, respectively.

In the molding machine, provided that the operating part is positioned on a front side of the machine, extraction of the molded article is normally carried out at a back side of the machine opposite to the front side, as shown in Fig. 7.

Instead of the extracting device of the rectangular coordinate system type, an extracting device having an articulated robot for extracting the molded article from the mold has been developed. (See Japanese Unexamined Patent Publication (Kokai) No. 10-95028 and Japanese Unexamined Patent Publication (Kokai) No. 9-201849.)

In the extracting device of prior art, the molded article extracted from the mold is usually carried to the back side of the molding machine. In particular, in the extracting device having a plurality of axes as shown in Fig. 7, the molded article is extracted to the back side of the machine. In the extracting device having the articulated robot described in Japanese Unexamined Patent Publication (Kokai) No. 10-95028, the robot is positioned on an upper part of a molding machine. However, as the robot mainly has arms capable of rotating about a vertical axis and a horizontal axis, a wide operating range cannot be obtained. Therefore, the extracting device also extracts the molded article to the back side of the machine in order to ensure safety of an operator and not to disturb the work of the operator. Further, in the extracting device having the articulated robot described in Japanese Unexamined Patent Publication (Kokai) No. 9-201849, the articulated robot is positioned on a lateral side of the molding machine and extracts the molded article to a position which is not at the front side of the machine.

On the other hand, it may be required that the molded article is extracted to the front side of the molding machine, due to, for example, a layout of a factory. Further, when a molding condition such as a temperature and a pressure of resin should be examined, the molded article may be required to be temporarily extracted to the front side of the machine, such that the operator may operate the operating part to finely adjust the molding condition by watching the result of molding.

In the extracting device having the articulated robot, such as described in Japanese Unexamined Patent Publication (Kokai) No. 10-95028 and Japanese Unexamined Patent Publication (Kokai) No. 9-201849; the molded article is carried to a limited position, depending on where the molded article is extracted. Therefore, if the molded article is intended to be moved to the front side of the molding machine, the molded article may be carried to the position where the operator operating the machine exists. This may be dangerous and may disturb the work of the operator.

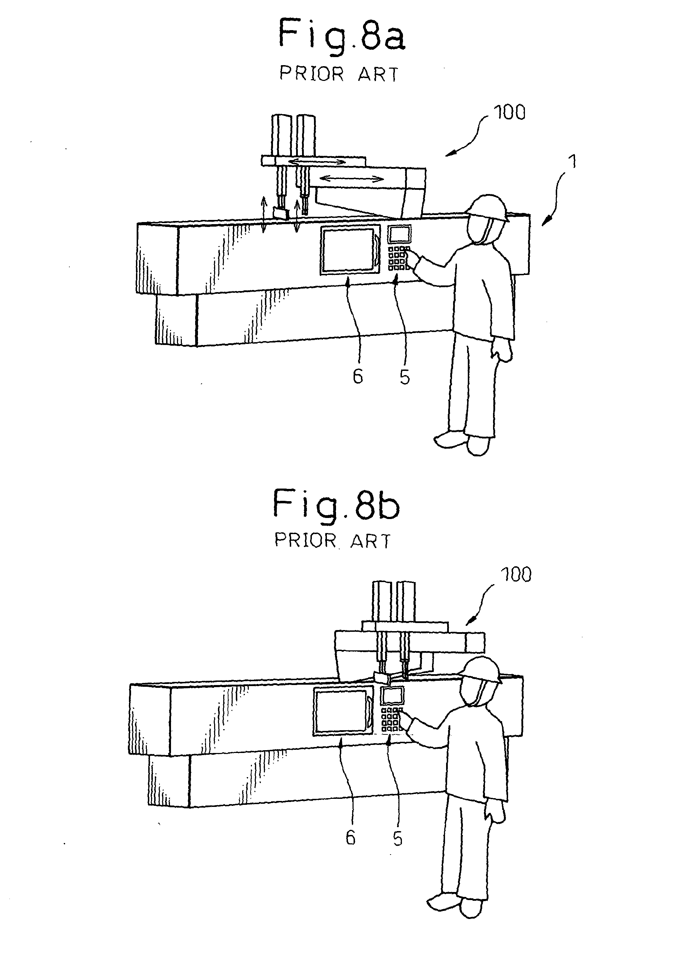

In the extracting device having a plurality of axes, as shown in Figs. 7 and 8a, the molded article is extracted to the back side of the molding machine so as not to disturb the work of the operator. However, as shown in Fig. 8b, in order to extract the molded article to the front side of the machine, the operating axis must extend toward the front side of the machine. Therefore, as a structure of the extracting device and a motion space of the arm may interfere with an operating space for the operating part of the machine, it is difficult to ensure the safety of the operator.

On the other hand, the applicant of the invention has proposed, in Japanese Patent Application No. 2004-64666, an extracting device using a robot in which a rotation axis of an arm of the robot is constituted by a vertical axis.

### SUMMARY OF THE INVENTION

An object of the present invention is to provide an extracting device using such a robot, capable of extracting the molded article to both of the front side and the back side of the molding machine, further, even when the molded article is extracted to the front side, it is capable of extracting the molded article so as not to disturb the work of the operator.

According to the present invention, there is provided an extracting device loaded on a molding machine having an operating part on a front side of the molding machine, for extracting a molded article when a mold of the molding machine is unclamped, the extracting device comprising: a base fixed to an upper part of the molding machine; a first arm having one end mounted to the base such that the first arm is rotatable about a generally vertical first axis; a second arm having one end mounted to another end of the first arm such that the second arm is rotatable about a second axis generally parallel to the first axis; a third arm having one end mounted to another end of the second arm such that the third arm is rotatable about a third axis generally parallel to the second axis; and a first vertical motion arm configured to go up and down relative to the third arm and having a first gripper at a front end of the first vertical motion arm; wherein the extracting device is capable of extracting the molded article selectively to a front side and a back side of the molding machine; and wherein the base, the first, second and third arms and the first vertical motion arm are configured such that a motion space, occupied by the extracting device when the extracting device moves between a position where the extracting device gripes the molded article in the opened mold and a position at the front side of the molding article to where the extracting device extracts the molded article, does not overlap with an operating space where an operator may exist during operating the operating part of the molding machine.

The extracting device may further comprise: an intermediate base member fixed to the third arm; a fourth arm having one end mounted to the intermediate base member such that the fourth arm is rotatable about a fourth axis generally parallel to the third axis; a fifth arm having one end mounted to another end of the fourth arm such that the fifth arm is rotatable about a fifth axis generally parallel to the fourth axis; a sixth arm having one end mounted to another end of the fifth arm such that the sixth arm is rotatable about a sixth axis generally parallel to the fifth axis; and a second vertical motion arm configured to go up and down relative to the sixth arm and having a second gripper at a front end of the second vertical motion arm. Therefore, the extracting device may extract a runner as well as the molded article.

The extracting device may further comprise a partition for separating the operating space from the motion space, so as to ensure the safety of the operator.

### BRIEF DESCRIPTION OF THE DRAWINGS

The above and other objects, features and advantages of the present invention will be made more apparent by the following description of the preferred embodiments thereof, with reference to the accompanying drawings, wherein:
Fig. 1 is a schematic perspective view showing an extracting device loaded on a molding machine of one embodiment of the invention;
Figs. 2a and 2b are explanatory views of arm constitutions of the extracting device of the embodiment;
Figs. 3a and 3b are top views of the molding machine including the extracting device of the embodiment, showing situations in which the molded article is extracted to a back side and front side of the molding machine, respectively;
Figs. 4a and 4b are top views of the molding machine including an extracting device of rectangular coordinate system type of prior art, showing situations in which the molded article is extracted to a back side and front side of the molding machine, respectively;
Fig. 5 is an explanatory view of a motion space of the extracting device of the embodiment at the front side of the molding machine;
Fig. 6 is an explanatory view of an example having a partition between the motion space of the extracting device and an operation space of an operator;
Fig. 7 is a perspective view showing of the molding machine including the extracting device of rectangular coordinate system type of prior art; and
Figs. 8a and 8b are explanatory views of the extracting device of rectangular coordinate system type of prior art, showing situations in which the molded article is extracted to a back side and front side of the molding machine, respectively.

### DETAILED DESCRIPTION

One embodiment of the present invention is explained below with reference to drawings.

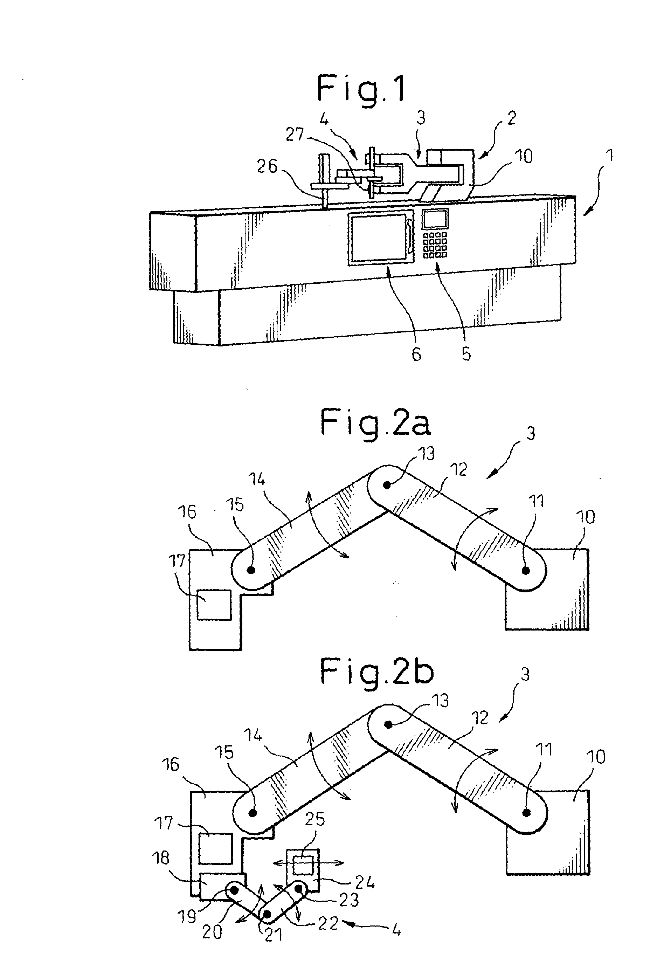

Fig. 1 is a schematic perspective view of an extracting device 2 for a molded article, loaded on a molding machine 1. The extracting device 2 is mounted on an upper part such as a fixed plate of the molding machine 1. The extracting device of the embodiment is constituted by a first unit 3 for driving a first vertical motion arm and a second unit 4 detachably mounted to the end of the first unit 3. Numerals 5 and 6 denote an operating part 5 and a safety door, respectively.

Fig. 2a is an explanatory view of an arm constitution of the extracting device 2. A base 10 is configured to connect the extracting device 2 to the molding machine 1. A first arm 12 has one end mounted to the base 10 such that the first arm 12 is rotatable about a generally vertical first axis 11. A second arm 14 has one end mounted to another end of the first arm 12 such that the second arm 14 is rotatable about a second axis 13 generally parallel to the first axis 11. A third arm 16 has one end mounted to another end of the second arm 14 such that the third arm 16 is rotatable about a third axis 15 generally parallel to the second axis 13. Further, a first vertical motion arm 17, mounted to the third arm 16 and configured to move parallel to the third axis 15 (or vertically), has a first gripper 26, at its front end, such as a hand or a sucker for gripping the molded article.

The base 10, the first axis and arm 11 and 12, the second axis and arm 13 and 14, the third axis and arm 15 and 16, and the first vertical motion arm 17 described above together constitute the first unit 3.

Further, as shown in Fig. 2b, an intermediate member 18 may be detachably attached to the third arm 16 or the end of the first unit 3, by a fastening means such as a screw. A fourth arm 20 has one end mounted to the intermediate member 18 such that the fourth arm 20 is rotatable about a fourth axis 19 generally parallel to the third axis 15. A fifth arm 22 has one end mounted to another end of the fourth arm 20 such that the fifth arm 22 is rotatable about a fifth axis 21 generally parallel to the fourth axis 19. A sixth arm 24 has one end mounted to another end of the fifth arm 22 such that the sixth arm 24 is rotatable about a sixth axis 23 generally parallel to the fifth axis 21. Further, a second vertical motion arm 25, mounted to the sixth arm 24 and configured to move parallel to the sixth axis 23, has a second gripper 27, at its front end, such as a hand or a sucker for gripping a runner. The intermediate member 18, the fourth axis and arm 19 and 20, the fifth axis and arm 21 and 22, the sixth axis and arm 23 and 24, and the second vertical motion arm 25 together constitute the second unit 4.

The first and the second units 3 and 4 may be separated from each other. In particular, the second unit 4 may be separated from or combined to the first unit 3 by removing or attaching the intermediate member 18 from or to the third arm 16. For example, when the first and the second units 3 and 4 are configured as extracting devices for the molded article and the runner, respectively, the second unit 4 may be detached from the first unit 3, if required.

The first to sixth arms 12, 14, 16, 20, 22 and 24 are configured to rotate about the axes parallel to each other. Therefore, when the base 10 is mounted to the upper part of the molding machine 1, as in this embodiment, each of the arms rotates about the vertical axis, in other words, on a horizontal plane. Only the vertical motion arms 17 and 25 can move in the vertical direction.

As described above, in the extracting device 2 of the embodiment, only the vertical motion arms 17 and 25 move in the vertical direction and, further, the first to sixth arms 12, 14, 16, 20, 22 and 24 rotate about the vertical axes. Therefore, a motion space in the horizontal plane in which the extracting device 2 can move is advantageously enlarged. As a result, the extracting device may safely extract the molded article to both of the front side (operating side) and back side of the molding machine without disturbing the work of the operator.

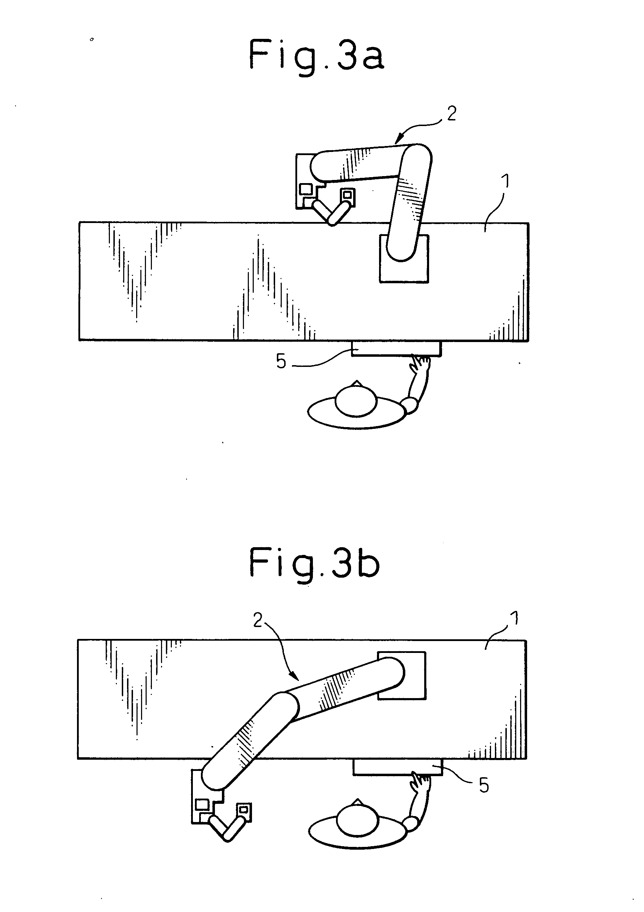

Figs. 3a and 3b are top views of the molding machine 1 including the extracting device 2 of the embodiment, showing situations in which the molded article is extracted to the back side and the front side of the molding machine 1, respectively. As shown in Figs. 3a and 3b, the arms of the extracting device 2 may extract the molded article while keeping away from an operating space where the operator may exist.

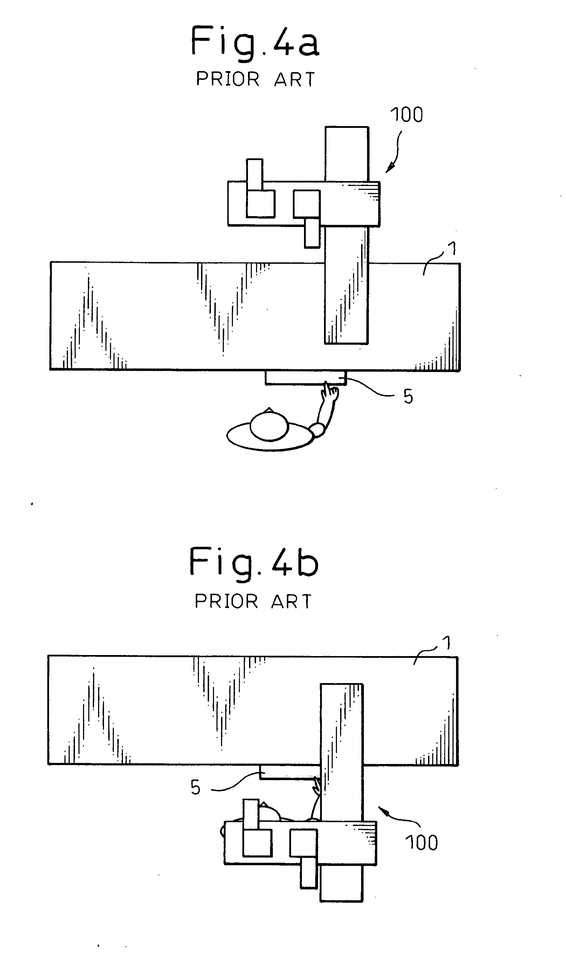

In order to compare with the extracting device of the present invention, Fig. 4 shows a top view of an extracting device 100 of the rectangular coordinate system type of prior art, loaded on the molding machine 1, for extracting the molded article to the back side of the molding machine 1. Also, Fig. 4b shows a top view of the extracting device 100 for extracting the molded article to the front side of the molding machine 1.

As is apparent from the comparison between Figs. 3a, 3b and Figs. 4a, 4b, when the molded article is extracted to the back side of the molding machine, there is no significant difference between the present invention and the prior art (see Figs 3a and 4a). However, when the molded article is extracted to the front side of the molding machine, in the extracting device 100 of prior art, the space where the operator operating the machine 1 stands and the space to where the molded article is extracted may be overlap with each other. Therefore, the operator may be disturbed during operating the molding machine by the extracting device 100 and may be in danger. On the other hand, in the extracting device 2 of the present invention, even when the molded article is extracted to the front side of the molding machine, the extracting device 2 may extract the molded article to a position away from the space where the operator may stand. Therefore, the work of the operator is not disturbed and the safety of the operator may be ensured.

It may be selectively changed to which side of the molding device the molded article is extracted, by a command to a not shown controller of the extracting device. For example, an operation may be possible in which the molded article is usually extracted to the back side but, during a predetermined time or when the operator instructs, the molded article is extracted to the front side as a sample for checking a quality of the molded article.

The command to the controller may be prepared by the molding machine 1. For example, the machine 1 may have a function part for judging a defectiveness of the molded article. In this case, a non-defective molded article may be extracted to the back side of the machine and a defective molded article may be extracted to the front side by the command from the machine 1 to the controller.

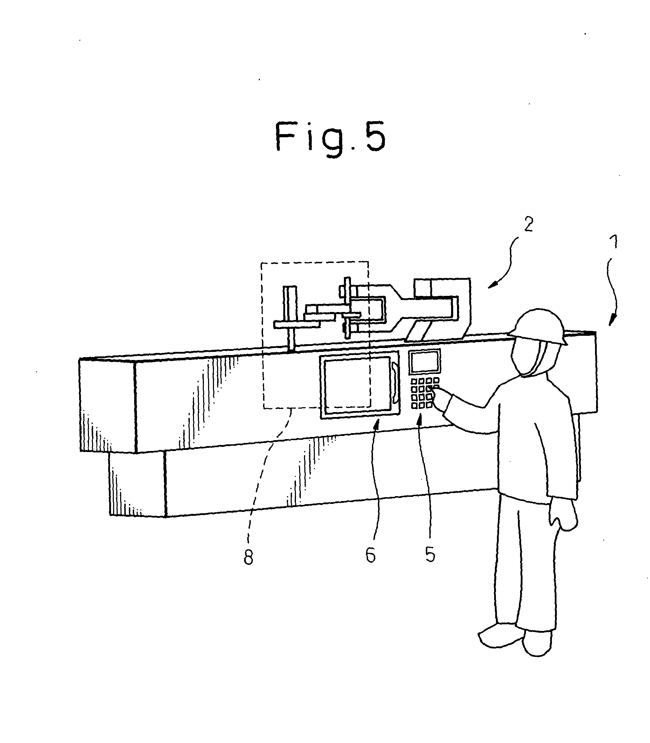

On the other hand, the operator not only operates the operating part 5 of the molding machine but also makes sure that the mold is opened through an inspection hole of the machine and carries out the maintenance of the mold by opening the safety door 6 when the molding is stopped. Therefore, it is preferable that a safe area for the operator includes not only the operating part 5 of the molding machine 1 but also a part or all of a front face of the safety door 6. In other words, it is preferable that the extraction of the molded article is carried out within a space 8 indicated by a dashed line, as shown in Fig. 5.

Further, as shown in Fig. 6, a partition 7 may be arranged such that the safe area for the operator including a part or all of the front face of the safety door 6 is defined, so as to ensure the safety of the operator.

According to the invention, the molded article may be extracted to both of the front side and the back side of the molding machine, while ensuring the safety of the operator, without modifying or displacing the extracting device.

While the invention has been described with reference to specific embodiments chosen for the purpose of illustration, it should be apparent that numerous modifications could be made thereto, by one skilled in the art, without departing from the basic concept and scope of the invention.

## Claims

1. An extracting device (2) loaded on a molding machine (1) having an operating part (5) on a front side of the molding machine (1), for extracting a molded article when a mold of the molding machine is unclamped, the extracting device comprising:
a base (10) fixed to an upper part of the molding machine (1);
a first arm (12) having one end mounted to the base (10) such that the first arm (12) is rotatable about a generally vertical first axis (11);
a second arm (14) having one end mounted to another end of the first arm (12) such that the second arm (14) is rotatable about a second axis (13) generally parallel to the first axis (11);
a third arm (16) having one end mounted to another end of the second arm (14) such that the third arm (16) is rotatable about a third axis (15) generally parallel to the second axis (13); and
a first vertical motion arm (17) configured to go up and down relative to the third arm (16) and having a first gripper (26) at a front end of the first vertical motion arm (17);
wherein the extracting device (2) is capable of extracting the molded article selectively to a front side and a back side of the molding machine (1);
and wherein the base (10), the first, second and third arms (12, 14, 16) and the first vertical motion arm (17) are configured such that a motion space, occupied by the extracting device (2) when the extracting device (2) moves between a position where the extracting device (2) gripes the molded article in the opened mold and a position at the front side of the molding article to where the extracting device (2) extracts the molded article, does not overlap with an operating space where an operator may exist during operating the operating part of the molding machine (1).

2. The extracting device as set forth in claim 1, further comprising:
an intermediate base member (18) fixed to the third arm (16);
a fourth arm (20) having one end mounted to the intermediate base member (18) such that the fourth arm (20) is rotatable about a fourth axis (19) generally parallel to the third axis (15);
a fifth arm (22) having one end mounted to another end of the fourth arm (20) such that the fifth arm (22) is rotatable about a fifth axis (21) generally parallel to the fourth axis (19);
a sixth arm (24) having one end mounted to another end of the fifth arm (22) such that the sixth arm (24) is rotatable about a sixth axis (23) generally parallel to the fifth axis (21); and
a second vertical motion arm (25) configured to go up and down relative to the sixth arm (24) and having a second gripper (27) at a front end of the second vertical motion arm (25).

3. The extracting device as set forth in claim 1 or 2, further comprising a partition (7) for separating the operating space from the motion space.
